# EUROPÄISCHE PATENTSCHRIFT

(11) **EP 0 979 967 B1**
(45) Veröffentlichungstag und Bekanntmachung des Hinweises auf die Patenterteilung: **06.02.2002**
(21) Anmeldenummer: 99114265.4
(22) Anmeldetag: 28.07.1999
(51) Int. Cl.: F16L 3/11, F16L 3/10, H02G 3/04, B25J 19/00, F16L 23/06

(54) **Schlauchhalter**
Support for hoses
Support pour tuyaux souples

(30) Priorität: 11.08.1998 DE 29814417 U
(43) Veröffentlichungstag der Anmeldung: 16.02.2000
(73) Patentinhaber: KUKA Roboter GmbH, 86165 Augsburg (DE)
(72) Erfinder: Hartmann, Georg, 86551 Aichach (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- FR-A- 2 376 319
- FR-A- 2 689 604
- US-A- 1 773 838
- US-A- 4 252 289
- US-A- 4 705 243

## Beschreibung

Die Erfindung betrifft einen Schlauchhalter, insbesondere zum Halten eines Schutzschlauches für Kabel an einem Roboter, mit zwei aneinander angelenkten und über einen mit einem Federbügel versehenen Hebel, schließbaren Halbschalen.

Derartige Schlauchhalter werden insbesondere an Robotern vorgesehen, um Schutzschläuche für außenseitig des Roboters geführte elektrische Kabel axial beweglich zu halten. Die Schlauchhalter sind mittels eines offenen, im Schnitt trapezförmig ausgebildeten Sockels an einem Halter, wie einem Teil des Roboters, einem Arm oder einer Schwinge, befestigt, wobei die freien Enden des trapezförmigen Sockels in der Regel einstückig mit dem eigentlichen, sich zu seinen freien Stirnseiten hin trompetenartig öffnenden Schlauchhalters verbunden sind. Da die die Schlauchdurchführung begrenzenden trompetenartig sich öffnenden Wandungen des Schlauchhalters elastisch und im übrigen aus zwei miteinander verbundenen Halbschalen gebildet sind, können Relativbewegungen des Schlauchhalters gegenüber dem ihn haltenden Teil des Roboters auftreten, die parallelogrammartige Bewegungen des Sockels des Schlauchhalters bewirken. Durch solche Bewegungen und die dabei auf den Schlauchhalter einwirkenden dynamischen Kräfte kann leicht eine Beschädigung und ein Bruch desselben auftreten.

Darüber hinaus liegt bei einem bekannten Schlauchhalter, siehe z.B. US-A-4 705 243, der Schließhebel zum Verschließen der beiden Halbschalen des Schlauchhalters frei oberhalb der erwähnten, den Schlauch führenden Wandungen. Es besteht daher die Gefahr, daß durch unbeabsichtigte Bewegungen, gegebenenfalls auch Vorbeigleiten von Teilen, der Hebel bewegt wird und der Schlauchhalter sich öffnen kann. Der Schlauch kann dann aus dem Schlauchhalter herausfallen, was bei einem sich bewegende Roboter erhebliche nachteilige Konsequenzen haben kann.

Der Erfindung liegt daher die Aufgabe zugrunde, unter Vermeidung der vorgenannten Nachteile einen Schlauchhalter der gattungsgemäßen Art dahingehend weiterzuentwickeln, daß insbesondere ein unbeabsichtigtes Öffnen des Schlauchhalters vermieden wird. Darüber hinaus sollte der Schlauchhalter sicher, fest und stabil an seinem ihn haltenden Teil festlegbar sein.

Erfindungsgemäß wird die genannte Aufgabe in einem Schlauchhalter der eingangs genannten Art gelöst, welcher dadurch gekennzeichnet ist, daß beidseitig des Hebels sich radial erstreckende Schutzrippen ausgebildet sind, die die Umfangskontur des Hebels in dessen Schließstellung abdecken.

Indem beidseitig des Hebels diesen in seiner Schließstellung radial überragende Rippen vorgesehen sind, wird ein unbeabsichtigtes Bewegen und Öffnen des Hebels durch sich entlang des Schlauchhalters bewegende Teile oder Elemente zuverlässig ausgeschlossen. Dadurch daß der Sockel mit achsparallelen Rippen im Bereich seiner Schenkel verstärkt ist, werden parallelogrammartige Bewegungen des Sockels selbst und damit Bewegungen des eigentlichen Schlauchhalters relativ zu dem ihn haltenden Teil zuverlässig ausgeschlossen.

Weitere Vorteile und Merkmale der Erfindung ergeben sich aus den Ansprüchen und der nachfolgenden Beschreibung, in der ein Ausführungsbeispiel der Erfindung unter Bezugnahme auf die Zeichnungen im einzelnen erläutert ist. Dabei zeigt:
- Fig. 1: einen Roboter in Seitenansicht;
- Fig. 2: den Roboter in Stirnansicht entsprechend dem Pfeil II der Fig. 1;

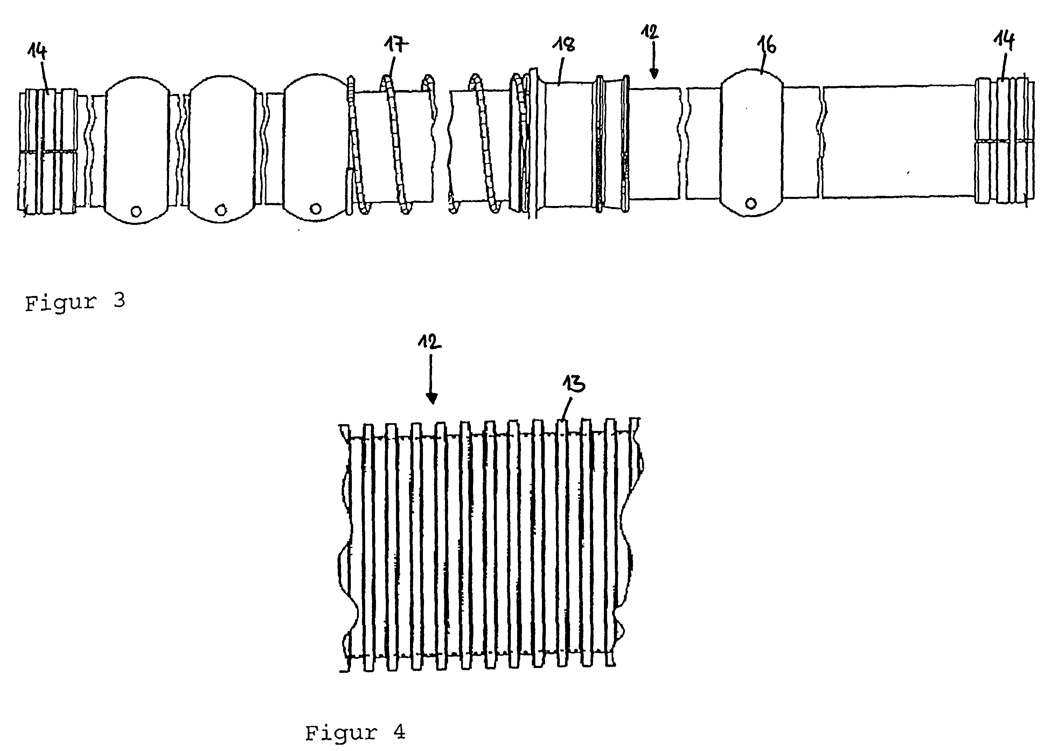

- Fig. 3: einen Schutzschlauch für Kabel mit seinen wesentlichen Komponenten;
- Fig. 4: eine vergrößerte Darstellung eines Ausschnitts des Schutzschlauches der Fig. 3;
- Fig. 5: eine Seitenansicht des erfindungsgemäßen Schlauchhalters, teilweise geschnitten; und
- Fig. 6: einen senkrechten Schnitt durch den erfindungsgemäßen Schlauchhalter der Fig. 5.

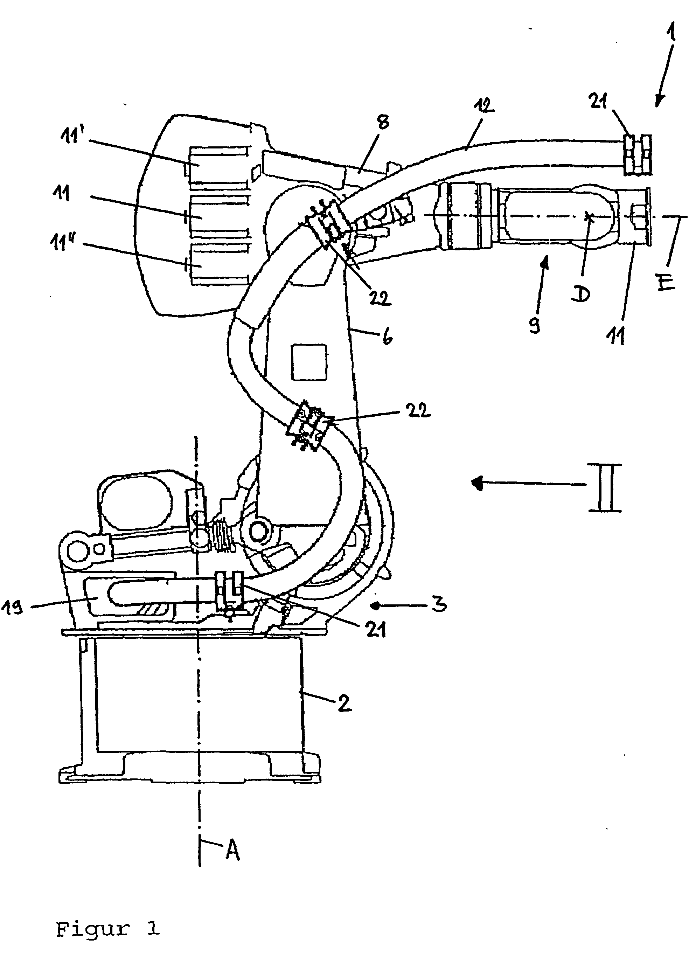

Der Roboter 1 der Fig. 1 weist einen fest mit dem Erdboden verbundenen Sockel 2 auf, auf dem sich die um die vertikale A-Achse drehbare Roboterbasis 3, das "Karussell", befindet. Mit dieser ist um die vertikale B-Achse mittels eines Motors 4 schwenkbar eine Schwinge 6 angeordnet. An deren der Basis 3 abgewandten freien Ende ist mit ihr und um die ebenfalls horizontale C-Achse mittels des Motors 7 verschwenkbar ein Roboterarm 8 angeordnet. Dieser trägt an seinem vorderen freien Ende 9 eine Roboterhand 11, die wiederum zumindest über eine weitere horizontale D-Achse und eine hierzu senkrecht gerichtete E-Achse verschwenkbar ist. Die Verschwenkung um letztere E-Achse kann von einem am rückwärtigen Ende des Armes 8 angeordneten Antriebsmotor 11 über sich durch den Arm 8 erstreckende Antriebselemente erfolgen. Weitere Bewegungen einer kompliziert ausgebildeten Roboterhand, wie einer Doppelwinkelhand oder eines Werkzeugs können durch weitere, am rückwärtigen Ende des Arms 8 angeordnete Motoren 11, 11' ebenfalls über durch den Arm 8 sich erstreckende Antriebselemente bewirkt werden.

Sowohl die Motoren als auch Werkzeuge, wie beispielsweise ein Schweißwerkzeug, müssen vom Robotersockel 2 her mit Energie versorgt werden. Dies kann durch die Roboterelemente (Schwinge, Arm) oder aber an der Außenseite des Roboters erfolgen, was in vielen Fällen vorteilhafter ist. Damit die Kabel zu einer Energieversorgung von Motoren und Werkzeugen geschützt sind, sind sie von einem Schutzschlauch 12 umgeben, der entlang der Außenseite des Roboters geführt und punktuell an diesem festgelegt ist.

Bei dem Schutzschlauch 12 handelt es sich um einen mit Rippen 13 versehenen Schlauch. Der Schlauch ist an seinen Enden mit Endstücken 14 versehen. Er kann Verschleißringe 16, sowie eine Druckfeder 17 aufweisen, die ihn bei Entlastung im Hinblick auf die Roboterbewegung in eine Ausgangslage bringt. Als Widerlager für die Druckfeder ist ein Federendhalter 18 vorgesehen.

Die Festlegung des Schlauches an der Basis 3 erfolgt bei dem dargestellten Ausführungsbeispiel durch ein Schottblech 19, sowie über die Länge des Schlauches hin durch Klemmschellen 21 und über sogenannte Trompeten 22.

Die Verschleißringe 16 verhindern ein direktes Scheuern und damit eine Beschädigung des Schlauches an bewegten Roboterteilen, wie an Schwinge 6, Arm 8 und Hand 11. Der Schlauchhalter 22 dient zur Abstützung und Führung des Schlauches 12 an einer oder mehreren Stellen an Schwinge 6 und Arm 8 des Roboters.

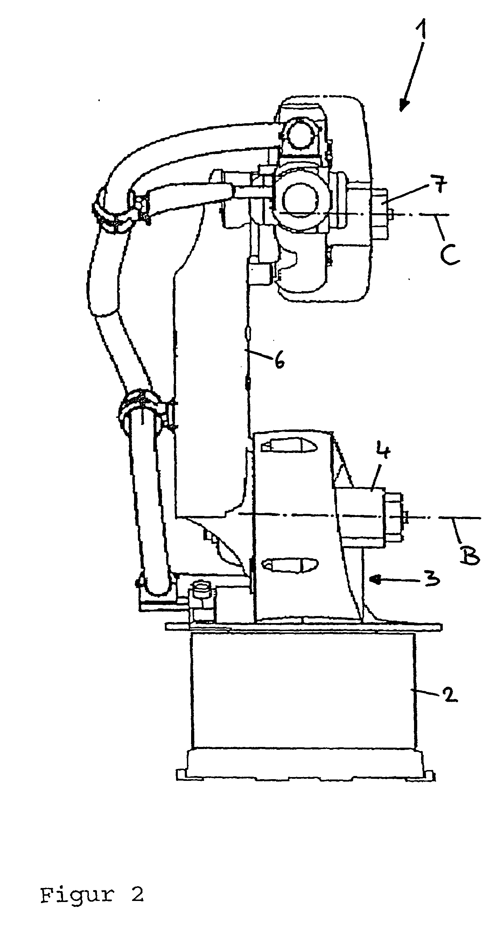

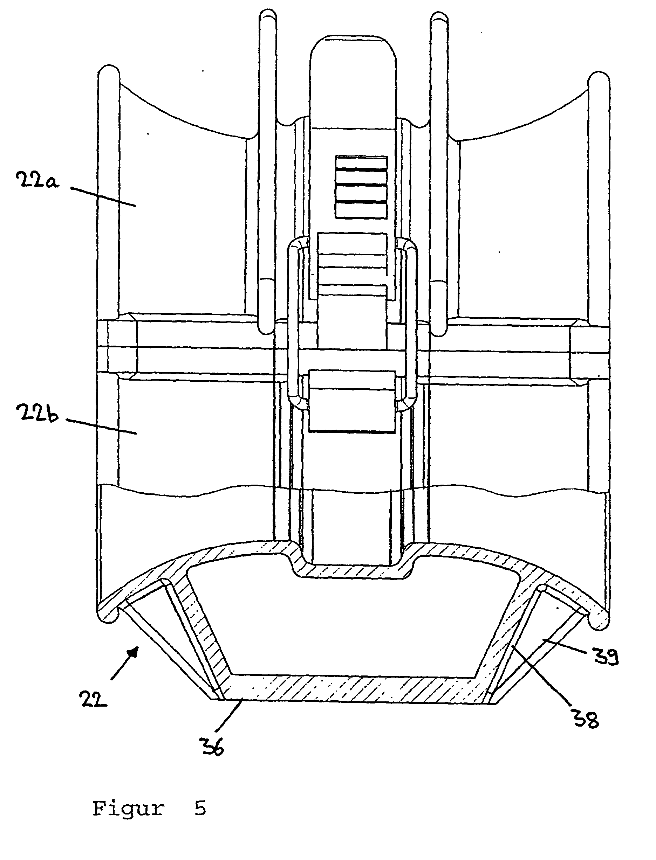

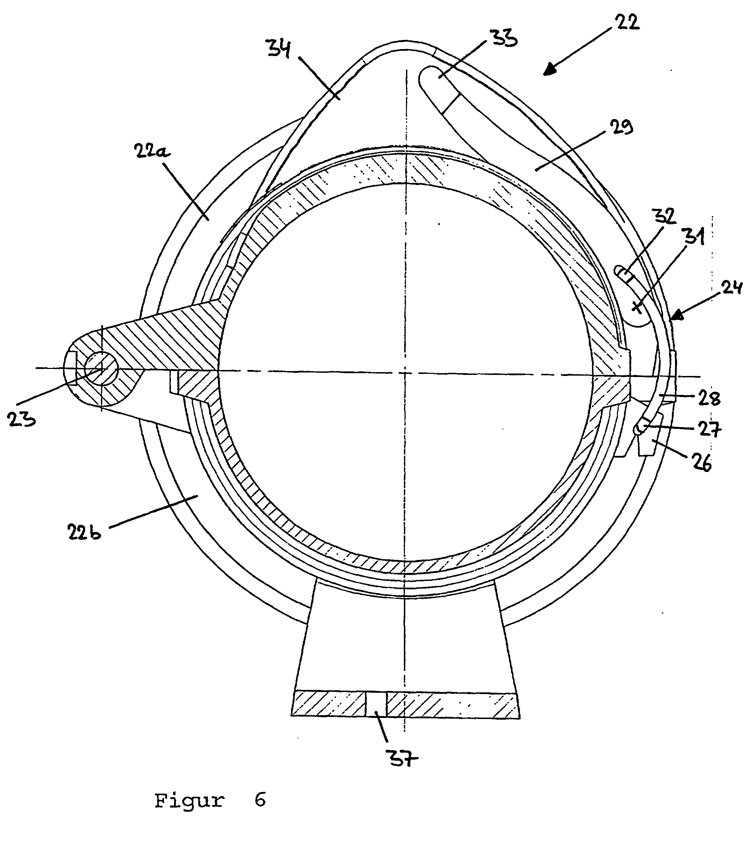

Ein Schlauchhalter, dessen Einsatz in den Fig. 1 und 2 dargestellt ist und mit dem der Schutzschlauch 12 axial verschieden am Roboter gehalten ist, ist im einzelnen in den Fig. 5 und 6 dargestellt.

Der Schlauchhalter 22 öffnet sich von seinem Mittelbereich zu seinen freien Stirnseiten hin trompetenartig. Er besteht aus zwei Halbschalen 22a, 22b, die bei 23 aneinander schwenkbar angelenkt sind, so daß der Schlauchhalter geöffnet und im geöffnetem Zustand des Schlauchhalters 22 der Schutzschlauch eingelegt und der Schlauchhalter 22 wieder geschlossen werden kann.

Zur Sicherung der Schließstellung des Schlauchhalters 22 ist ein Schließmechanismus 24 vorgesehen. Dieser weist an der unteren Halbschale 22b eine mit einer nutartigen Hinterschneidung versehene Sicherungsnase 26 auf. In diese greift der freie Steg 27 eines Federbügels 28 ein, der mit seinem dem Steg 27 abgewandten Ende in Form von zwei relativ zu seinen Schenkeln abgebogenen Enden an einem Schwenkhebel 29 festgelegt ist. Der Federbügel 28 ist dabei am Schwenkhebel 29 exzentrisch zu dessen Lagerachse 31 an der oberen Halbschale 32 angelenkt, und zwar zwischen der Anlenkung 31 des Schwenkhebels 29 und dessen freien Betätigungsende 33.

Parallel zum Schwenkhebel 29 verlaufen an der oberen Halbschale 22a zwei sich radial erstreckende Schutzrippen 34, die die Radialkontur des Schwenkhebels 29 in dessen an der oberen Schale 22a anliegenden Schließstellung vollständig überdecken, wie der Fig. 6 zu entnehmen ist.

Hierdurch wird verhindert, daß der Schwenkhebel 29 durch an ihm sich entlang bewegende Teile unbeabsichtigt geöffnet und damit der gesamte Schlauchhalter geöffnet wird.

Der Schlauchhalter 22 ist über einen an seiner unteren Halbschale 22b einstückig ausgebildeten trapezförmigen Sockel 36 am Roboter festlegbar, und zwar mittels einer Schraubbefestigung über einen Durchbruch 37. Der Sockel 36 ist mit seinen trapezförmig sich öffnenden Schenkeln an den mehr oder minder flexiblen trompetenartigen Erweiterungen des Schlauchhalters verbunden. Bei einer bevorzugten Ausgestaltung sind zusätzlich zu den im wesentlichen achssenkrechten Ebenen bildenden Schenkeln 38 des trapezförmigen Sockels 36 an diesen achsparallel gerichtete Rippen 39 vorgesehen, die den Sockel 36 insgesamt aussteifen und damit eine parallelogrammartige Bewegung des Sockels 36 festgelegt ist, verhindern.

## Patentansprüche

1. Schlauchhalter (22), insbesondere zum Halten eines Schutzschlauches für Kabel an einem Roboter, mit zwei aneinander angelenkten und über einen mit einem Federbügel versehenen Hebel (29) schließbaren Halbschalen (22a, 22b), **dadurch gekennzeichnet, daß** beidseitig des Hebels (29) sich radial erstreckende Schutzrippen (34) ausgebildet sind, die die Umfangskontur des Hebels (29) in dessen Schließstellung abdecken.

2. Schlauchhalter nach Anspruch 1, **gekennzeichnet durch** Versteifungsrippen (39) an einem Befestigungssockel (36) zur Befestigung des Schlauchhalters (22).

## Claims

1. Hose support (22), particularly for supporting a protective hose for cables on a robot, having two half-shells (22a, 22b) articulated to one another and closable by means of a lever (29) provided with a spring clip, **characterized in that** on the either side of the lever (29) are formed radially extending protective ribs (34), which cover the circumferential contour of the lever (29) in the closed position thereof.

2. Hose support according to claim 1, **characterized by** stiffening ribs (39) on a fixing base (36) for fixing the hose support (22).

## Revendications

1. Support pour tuyau souple (22), en particulier pour le maintien d'un tuyau souple de protection des câbles de liaison à un robot, comportant deux demi-coquilles (22a, 22b) articulées entre elles et se refermant l'une sur l'autre au moyen d'un levier (29) muni d'une bride à effet de ressort, **caractérisé en ce que** des nervures de protection (34) s'étendant radialement sont conformées de part et d'autre du levier (29), nervures qui recouvrent le contour périphérique du levier (29) en position de fermeture.

2. Support pour tuyau souple selon la revendication 1, **caractérisé par** des nervures de rigidification (39) sur un socle de fixation (36) pour la fixation du support pour tuyau souple (22).
